# EUROPEAN PATENT SPECIFICATION

(11) **EP 3 167 725 B1**
(45) Date of publication and mention of the grant of the patent: **25.03.2020**
(21) Application number: 15819571.9
(22) Date of filing: 03.07.2015
(51) Int. Cl.: C12G 3/04, A23L 2/58, C09K 15/08, C12G 3/00, A23L 2/52, C09B 61/00, C09B 63/00, C09B 44/04

(54) **COLORED FOOD**
GEFÄRBTE NAHRUNGSMITTEL
ALIMENT COLORÉ

(30) Priority: 09.07.2014 JP 2014141719
(43) Date of publication of application: 17.05.2017
(73) Proprietor: Suntory Holdings Limited, Osaka-shi, Osaka 530-8203 (JP)
(72) Inventor: KAGEYAMA, Norihiko, Kawasaki-shi Kanagawa 211-0067 (JP); OHIRA, Takahiro, Kawasaki-shi Kanagawa 211-0067 (JP)
(74) Representative: Vossius & Partner Patentanwälte Rechtsanwälte mbB
(86) International application number: PCT/JP2015/069295
(87) International publication number: WO 2016/006552

(56) References cited:
- WO-A1-2005/108503
- JP-A- 2001 275 611
- JP-A- 2001 275 611
- US-A- 5 908 650
- US-A- 5 908 650
- MAARIT J. REIN ET AL: "Stability and Enhancement of Berry Juice Color", JOURNAL OF AGRICULTURAL AND FOOD CHEMISTRY, vol. 52, no. 10, 1 May 2004 (2004-05-01), pages 3106-3114, XP055019393, ISSN: 0021-8561, DOI: 10.1021/jf035507i
- REIN, M. J. ET AL.: 'Stability and enhancement of berry juice color' JOURNAL OF AGRICULTURAL AND FOOD CHEMISTRY vol. 52, 2004, pages 3106 - 3114, XP055019393

## Description

### TECHNICAL FIELD

The present invention relates to colored foods that retain their inherent good flavors and which yet feature suppressed fading of dyes. More particularly, it relates to colored foods, which contain 20 vol% or more of ethanol and that contain rosmarinic acid and which are reduced in the contents of luteolin-3'-glucuronide, carnosic acid, and carnosol.

### BACKGROUND ART

Colorful foods help make a rich life but, on the other hand, dyes that provide their colors may sometimes fade. Especially, photo-irradiation as with sunlight, fluorescent lamps and LEDs is known to cause the fading of dyes. Various ways are being studied in order to prevent discoloration or fading of dyes in foods.

It is known that antioxidants capable of inhibiting the oxidation of dyes are effective for suppressing the fading of dyes (Patent Document 1). For the purpose of addition to foods, it is preferred to use antioxidants of natural origin. Among the ingredients of natural origin, plants of the family Lamiaceae are known to contain antioxidant components, and it is also known that the extract of rosemary which is a plant of the family Lamiaceae contains antioxidant components (Patent Document 2). Rosemary is a kind of herb having a characteristic aroma, so it is known as a spice that is used to impart a taste or aroma to meats and other foods (Patent Document 3) but on some occasions, it is also used in a small quantity as an agent for preventing the fading of dyes in foods (Patent Document 4).

Since the rosemary extract contains not only rosmarinic acid but also many other components, it is not clear which components work effectively in the agent for preventing the fading of dyes (Patent Document 4). JP 2001 275611 describes a colored (anthocyanin) beverage or colored jelly that contains rosmarinic acid and a colorant.

Further, the term "fruit based alcoholic drinks" is mentioned in a list. MAARIT J. REIN ET AL: "Stability and Enhancement of Berry Juice Color", JOURNAL OF AGRICULTURAL AND FOOD CHEMISTRY, vol. 52, no. 10, 1 May 2004 (2004-05-01), pages 3106-3114 relates to the use of commercial rosmarinic acid to enhance the color of strawberry, raspberry, cranberry or lingonberry juice.

### CITATION LIST

### PATENT LITERATURE

Patent Document 1: JP H8-112076 A
Patent Document 2: JP 2003-105337 A
Patent Document 3: JP 2007-312752 A
Patent Document 4: JP 2002-363557 A

### SUMMARY OF INVENTION

### TECHNICAL PROBLEM

Conventional antioxidants of natural origin are often low in antioxidizing power and to prevent the fading of dyes in foods completely, it has been required to add large quantities antioxidants to foods. Even the rosemary extract which has a relatively strong antioxiding power and can effectively suppress the fading of dyes in foods has had the problem that if it is used in quantities that provide the effect for suppressing the fading of dyes, it imparts to foods a taste or smell that is characteristic of its nature as a kind of herbal spice. It has therefore been desired to develop a method by which the inherent good flavors of foods can be retained while suppressing the fading of dyes in the foods.

The present invention has been accomplished for the purpose of solving these problems and has as its objective of providing colored foods that retain their inherent good flavors and which yet feature suppressed fading of their dyes.

### SOLUTION TO PROBLEM

The invention is defined by the claims.
The present inventors conducted intensive studies in order to attain the stated objective and found that the contents of luteolin-3'-glucuronide, carnosic acid, and carnosol contained in rosemary are associated with the characteristic smell of rosemary. The inventors also found that colored foods that contain rosmarinic acid and which are reduced in the contents of luteolin-3'-glucuronide, carnosic acid, and carnosol are capable of retaining their inherent good flavors while suppressing the fading of their dyes. The inventors further found that in the colored foods that contained rosmarinic acid and which were reduced in the contents of luteolin-3'-glucuronide, carnosic acid, and carnosol, the effect for suppressing the fading of dyes was increased synergistically through the addition of an alcohol, particularly ethanol, in an amount of 20 vol% or more.

Briefly, the present invention encompasses, but is not limited to, the following modes.
[1] A colored food that contains rosmarinic acid and a dye component and in which the ratio in weight concentration of luteolin-3'-glucuronide to rosmarinic acid is 0.5 or less and which further contains 20 vol% or more of ethanol.
[2] The colored food as recited in [1], wherein the ratio in weight concentration of luteolin-3'-glucuronide to rosmarinic acid is from 0 to 0.45.
[3] The colored food as recited in [1] or [2], wherein the content of rosmarinic acid is from 3 ppm to 1000 ppm.
[4] The colored food as recited in any of [1] to [3], wherein the content of luteolin-3'-glucuronide is 12 ppm or less.
[5] The colored food as recited in [4], wherein the content of luteolin-3'-glucuronide is from 0 ppm to 5 ppm.
[6] The colored food as recited in any of [1] to [5], wherein the content of carnosic acid and/or carnosol is 0.5 ppm or less.
[7] A colored food that contains rosmarinic acid and a dye component and in which the content of rosmarinic acid is from 3 ppm to 1000 ppm and the content of luteolin-3'-glucuronide is 12 ppm or less and which further contains 20 vol% or more of ethanol.
[8] The colored food as recited in [7], wherein the content of luteolin-3'-glucuronide is from 0 ppm to 5 ppm.
[9] The colored food as recited in [7] or [8], wherein the content of carnosic acid and carnosol is 0.5 ppm or less.
[10] The colored food as recited in any of [1] to [9] which does not contain carnosic acid or carnosol.
[11] The colored food as recited in any of [1] to [10] which is a beverage.
[12] The colored food as recited in [11], wherein the beverage is filled in a container.
[13] The colored food as recited in any of [1] to [12], wherein the dye component is a dye having the anthocyanin skeleton.
[14] The colored food as recited in any of [1] to [13], wherein the dye component is a tar dye.

### ADVANTAGEOUS EFFECTS OF INVENTION

According to the present invention, there can be provided colored foods that retain their inherent good flavors and which yet feature suppressed fading of their dyes.

### DESCRIPTION OF EMBODIMENTS

### (Rosmarinic acid)

The present invention relates to colored foods that contain rosmarinic acid and a dye component.

Rosmarinic acid as used in the present invention has the systematic name of (2"R")-2-[[(2"E")-3-(3,4-dihydroxyphenyl)-1-oxo-2-propenyl]]oxy]-3-(3,4-dihydroxyphenyl)propanoic acid and is a compound represented by the following formula:

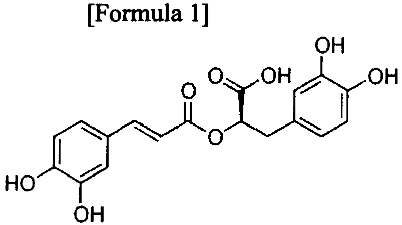

Rosmarinic acid is one of the phenol carboxylic acids contained in herbs and is particularly abundant in plants of the family Lamiaceae. Rosmarinic acid is structurally a dimer of phenylpropanoids, so compared to monomeric phenylpropanoids such as ferulic acid, caffeic acid and chlorogenic acid, it is rich in phenolic hydroxyl groups. Hence, rosmarinic acid shows higher antioxidation activity than monomeric phenylpropanoids. The antioxidation activity of rosmarinic acid can be measured using as an indicator the activity for scavenging radicals such as DPPH radicals, superoxide anion radicals, or hydroxyl radicals. As another feature, rosmarinic acid has conjugated double bonds in its structure, so it also shows high activity for preventing photodegradation. Rosmarinic acid as used in the present invention encompasses both free rosmarinic acid and derivatives of rosmarinic acid. Derivatives of rosmarinic acid include, but are not limited to, glycosides formed by attaching a saccharide such as glucose to the position of any hydroxyl group in rosmarinic acid.

The rosmarinic acid to be used in the present invention may be extracted from natural materials such as plants of the family Lamiaceae; alternatively, it may be produced by organic synthesis. Commercial products of rosmarinic acid may also be used. From the viewpoint of incorporation in foods, it is preferred to use rosmarinic acid as extracted from natural materials. Among the plants of the family Lamiaceae, rosemary has a particularly high content of rosmarinic acid, so it is preferred to use rosmarinic acid as extracted from rosemary.

The rosemary to be used in the present invention may be selected from usual commercial products of rosemary but these are not the sole examples that can be used. Rosemary (Rosmarinus officinalis) is an evergreen shrub belonging to the family Lamiaceaehe, native to the Mediterranean coastal region. It comes in diverse varieties, which may be upright or trailing. The colors of the flowers mostly range from blue to purple, some being white or pink. The Japanese name for rosemary is *mannenro* and it is written in Chinese characters which can be pronounced as *MEITETSUKO,* which is also the case in China. Fresh or dried leaves are used as a spice, and essential oil is also used as a medication. Flowers are also edible. Principal production areas for rosemary are not particularly limited; it grows even in hostile climates such as deserts located in arid plateaus and examples of production areas include northern parts of Africa such as Morocco and southern parts of West Europe such as Spain. Rosemary helps keep meats fresh for a prolonged period of time, so in Europe, it has been frequently used on meat dishes from ancient times. Rosemary is also used as a spice for curry, pot-au-feu, Eintopf, and so on. In the present invention, the whole of rosemary or any of its parts, i.e., leaves, roots, stems, flowers, fruits, and seeds, may be used, and leaves are preferably used. Usually, rosemary is put to use after it is minced to enhance the extraction efficiency.

The methods for extracting rosmarinic acid from rosemary are not particularly limited but a common method of extraction is as follows.

Rosmarinic acid is obtained by purifying a water-soluble extract of rosemary. Hence, extractive treatment is performed with hexane, hexane/ethanol, ethanol, hydrous ethanol, or supercritical carbon dioxide, then water is added to the resulting extract to have a non-water-soluble component deposited, and the solution from which the non-water-soluble component has been separated out is appropriately concentrated by a suitable method such as vacuum concentration to yield a purified form of rosmarinic acid. A hydrous ethanol that can be used with advantage is one having a water content of 40-60 vol%. The purified form of rosmarinic acid may optionally be subjected to further purification using a silica gel column, activated charcoal, etc. (JP S55-18435 A, JP S55-102508 A, JP H8-67874 A, etc.)

### (Rosemary extract)

The present invention relates to colored foods that contain rosmarinic acid and a dye component and which are reduced in the contents of luteolin-3'-glucuronide, carnosic acid, and carnosol.

In one of its modes, the present invention relates to a colored food that contains a dye component and in which the weight concentration ratio of luteolin-3'-glucuronide to rosmarinic acid is 0.5 or less. The weight concentration ratio of luteolin-3'-glucuronide to rosmarinic acid may range from 0 to 0.45, preferably from 0.01 to 0.45, and more preferably from 0.05 to 0.4. Here, luteolin-3'-glucuronide (luteolin-3'-O-glucuronide) is a compound consisting of glucuronic acid bound to luteolin at position 3' to present the following structure:

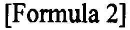

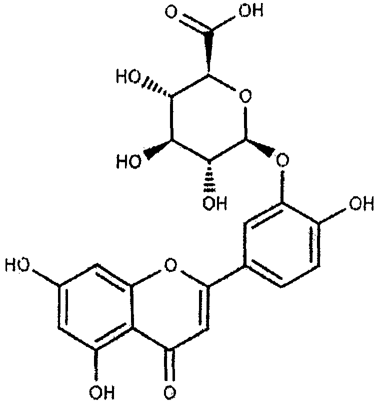

An example of the rosmarinic acid that can be used in the present invention is a rosemary extract in which the weight concentration ratio of luteolin-3'-glucuronide to rosmarinic acid is 0.5 or less. Through addition of such rosemary extract, one can produce a colored food in which the weight concentration ratio of luteolin-3'-glucuronide to rosmarinic acid is 0.5 or less.

Such a rosemary extract can, for example, be produced by a method comprising the steps of:
immersing a plant body of rosemary in an aqueous solution containing 3 vol% to 70 vol% of ethanol and storing the aqueous solution at ordinary temperature for half a day to 30 days; and
removing the plant body of rosemary from the stored aqueous ethanol solution to obtain the supernatant of the aqueous ethanol solution.

The aqueous ethanol solution into which the plant body of rosemary is immersed may be an aqueous solution containing 5 vol% to 65 vol% of ethanol, preferably an aqueous solution containing 10 vol% to 60 vol% of ethanol. Using an aqueous solution containing ethanol at concentrations in excess of 70 vol% is not preferred because luteolin-3'-glucuronide, carnosic acid, and carnosol, etc. which are components that affect flavor are extracted in large amounts into the rosemary extract. The time period over which the plant body of rosemary is immersed in the aqueous ethanol solution may range from half a day to 20 days, preferably from a day to 15 days.

### (Dye components)

Any dyes that are approved for use in foods may be used as a dye component in the present invention without particular limitation, irrespective of whether they are natural or synthetic.

Examples of natural dyes include, but are not limited to, the following: carotenoid dyes such as annatto dye, gardenia yellow dye, dunaliella carotene, carrot carotene, palm oil carotene, tomato dye, and paprika dye; quinone dyes such as madder dye, cochineal dye, *shikon* dye, and lac dye; dyes having the anthocyanin skelelton, such as red cabbage dye, Perilla frutescens dye, hibiscus dye, grape juice dye, grape skin dye, purple sweet potato dye, purple corn dye, elderberry dye, and boysenberry dye; flavonoid dyes such as cacao dye, kaoliang dye, sandal wood dye, onion dye, tamarind dye, Japanese persimmon dye, carob germ dye, licorice dye, sappan wood dye, carthamus red dye, and carthamus yellow dye; porphyrin dyes such as chlorophyllin, chlorophyll, and spirulina dye; diketone dyes such as turmeric dye; azaphilone dyes such as monascus; betacyanine dyes such as beet red; and others including monascus yellow, caramel, gardenia blue dye, gardenia red dye, gold, silver, and aluminum.

Examples of synthetic dyes include, but are not limited to, the following synthetic colorants: tar dyes such as Red No. 2, Red No. 3, Red No. 40, Red No. 102, Red No. 104, Red No. 105, Red No. 106, Yellow No. 4, Yellow No. 5, Blue No. 1, Blue No. 2, and Green No. 3; inorganic pigments such as diiron trioxide and titanium dioxide; natural dye derivatives such as norbixin Na·K, copper chlorophyll, copper chlorophyllin Na, and iron chlorophyllin Na; and natural-type synthetic dyes such β-carotene, riboflavin, riboflavin butyrate ester, and riboflavin 5'-phosphate ester Na.

Notably, dyes having the anthocyanin skeleton and tar dyes are preferred.

### (Colored foods)

The present invention relates to colored foods that retain their inherent good flavors and which yet feature significantly suppressed fading of dyes.

Fading as herein referred to has a broad concept covering the color regression and discoloration of dyes. As used herein, the term "fading" is interchangeable with the term "color degradation." Colored foods as herein referred to may, depending on their color, develop bright coloration through the mixing of two or colorants. In a case like this, a certain dye alone may sometimes fade to present a seemingly discolored appearance. In the present invention, such discoloration is also included in the definition of "fading."

Fading as herein referred to covers not only the phenomenon of fading due to heat but also the phenomenon of fading due to light. Fading can be confirmed by any methods including visual inspection that are well known to the skilled artisan and they include, but are not limited to, measurement of absorbance (the wavelength at which a dye of interest has maximum absorption.)

The form that can be assumed by the colored foods of the present disclosure is not particularly limited as long as they are foods colored with dyes. It should, however, be noted that the utility of the present invention is increased in foods that are prone to fade in color if they do not contain antifading agents. Examples of the colored foods of the present disclosure include: beverages; milk beverages; alcoholic beverages; foods such as cooked rice, cereals (e.g., rice, wheat, barley, maize, foxtail millet, millet), bread, other wheat flour products, noodles, roux for curry or stew, frozen foods, chilled foods, retorted foods, dairy products (e.g. ice cream), and processed milk products; beverages such as milk, soft drinks, carbonated drinks, green tea, black tea, oolong tea, coffee, cocoa, refined *sake,* beer, low-malt beer, synthetic refined *sake, mirin* (sweet cooking rice wine), wine, *shochu* (Japanese distilled spirit), whiskey, and vegetable juice; seasonings such as *miso* (bean paste), *shoyu* (soy sauce), vinegar, seasonings for *umami,* dressings, sauce, and mayonnaise; processed marine foods such as fish paste products, fish ham, sausages, *katsuobushi* (dried bonito), *tsukudani* (food boiled in soy sauce); frozen foods such as cooked rice, noodles, croquette, hamburg steak, steamed Chinese dumplings, Japanese pan-fried dumplings, or gratin, all being in frozen state; instant foods such as instant noodles, instant soup, instant curry, instant *miso* soup, and instant coffee; and confections such as Japanese confectionery (including unbaked or half-baked), Western confectionery (including unbaked or half-baked), candies, chocolates, chewing gums, biscuits, rice confectionery, snack packs, oiled confectionery, and miscellaneous confectionery.

In one mode, the colored foods of the present invention are colored beverages. The beverages of the present invention can be filled into containers. The form of the containers is not particularly limited and the beverages can be provided in usual forms such as molded containers made primarily from plastics (as in PET bottles), metal cans, paper containers laminated with metal foils or plastic films, and glass bottles. According to the present invention, the fading of dyes due, for example, to prolonged storage can be sufficiently suppressed that those beverages in containers which are to be drunk a certain length of time after manufacture can benefit considerably and, hence, advantageously from the effects of the present invention. The beverages in containers of the present invention can preferably be supplied as filled into PET bottles, more preferably PET bottles with a capacity of 1 to 2 liters.

The protection of the beverages of the present invention against fading can be enhanced synergistically if they are rendered alcoholic through the addition of 20 vol% or more ethanol. Unless otherwise noted, the term "alcohol" as used in the disclosure refers to ethyl alcohol (i.e. ethanol). And the alcohol content refers to the vol% of an alcohol in an aqueous alcohol solution.

The alcohols that can be used in the present disclosure are not particularly limited. Examples include fermented alcohols, the class of spirits (spirits such as gin, vodka, rum, tequila, and "new" spirits, as well as materials alcohols), the class of liqueurs, the class of whiskeys (e.g. whiskey and brandy), or *shochu* (continuously distilled *shochu* or so-called *shochu* group *Ko,* and single distilled *shochu* or so-called *shochu* group *Otsu*), as well as fermented or brewed alcoholic liquors including refined *sake,* wine, and beer.

The amount of the alcohols that can be added is not particularly limited. Since the effects of the present invention increase in the presence of an alcohol, it is highly superior and, hence, is preferred in so-called "high alcohol-content" beverages. As regards the range of alcohol content, the effects of the present disclosure can preferably be enhanced if it is at least 5 vol%, more preferably at least 10 vol%, and even more preferably at least 20 vol%. Even if the alcohol content exceeds 80 vol%, no particular problem occurs to the effectiveness of the present invention but the result may potentially be a product that is not preferred as a beverage. The lower limit of the alcohol content of the present disclosure is not particularly limited but it is at least 1 vol% in a preferred mode.

The alcohol content in the beverage of the present invention can be measured with a vibrating densitometer as follows. A sample is distilled on direct fire and the resulting distillate is measured for density at 15°C, which is converted to a corresponding value of alcohol content in accordance with "Table 2: Conversion Tables for Alcohol Content Relative to Density (15°C) and Specific Gravity (15/15°C)," an annex to the National Tax Agency's Official Methods of Analysis (Heisei 19 Instructions from National Tax Agency, volume 6, revised on June 22, 2007).

And the alcohol-containing beverage according to the present invention may contain carbon dioxide gas. Addition of carbon dioxide gas may be carried out by using any methods that are usually known to the skilled artisan and they include, but are not limited to, the following: dissolving carbon dioxide in the beverage under pressure; mixing carbon dioxide with the beverage in piping using a mixer such as a carbonator available from GEA Tuchen hagen Gmbh; spraying the beverage into a carbon dioxide filled tank such that the carbon dioxide is absorbed by the beverage; or mixing the beverage with carbonated water to make a CO₂ containing beverage. The pressure of carbon dioxide gas in the CO₂ containing beverage of the present invention is preferably within a range where the refreshing sensation derived from carbon dioxide gas is perceived, as exemplified by the range from 0.5 to 3.0 kgf/cm², preferably from 1.5 to 3.0 kgf/cm², according to a method for carbon dioxide gas pressure measurement that is usually known to the skilled artisan.

And the alcohol-containing beverage according to the present invention may contain fruit juice. Any fruit juice can be used without particular limitation as long as it is applicable to ordinary beverages, and it may be either straight fruit juice which is used as freshly squeezed from fruit or in a concentrated form of fruit juice. Turbid fruit juice can also be used and other examples that can be used include: whole fruit juice prepared by grinding the whole body of a fruit including its outer skin and removing only large and hard solids such as seeds; puréed fruit prepared by straining fruit; or fruit juice prepared by grinding or extracting the flesh of a dried fruit.

The type of applicable fruits is not particularly limited and examples include: citrus fruit juices (orange juice, mandarin orange juice, grapefruit juice, lemon juice, lime juice, etc.), apple juice, grape juice, peach juice, tropical fruit juices (pineapple, guava, banana, mango, acerola, papaya, passion fruit, etc.), and other fruit juices (Prunus mume juice, pear juice, apricot juice, plum juice, berry juice, kiwi fruit juice, etc.), tomato juice, carrot juice, strawberry juice, melon juice, etc., preferably selected from among citrus fruit juices (orange juice, mandarin orange juice, grapefruit juice, lemon juice, lime juice, etc.), grape juice, peach juice, etc. These fruit juices may be used either singly (only one kind is used) or in combination (two or more kinds are used).

In the colored foods of the present invention, the weight concentration ratio of luteolin-3'-glucuronide to rosmarinic acid is 0.5 or less. The weight concentration ratio of luteolin-3'-glucuronide to rosmarinic acid may range from 0.01 to 0.5, or it may range from 0.05 to 0.4. The content of luteolin-3'-glucuronide is associated with the characteristic smell of rosemary; however, since this substance also has an anti-fading effect, the inherent flavors of the foods can be kept at satisfactory levels while enhancing the anti-fading effect of rosmarinic acid by setting the weight concentration ratio of luteolin-3'-glucuronide to rosmarinic acid to lie within the above-cited ranges.

And the content of luteolin-3'-glucuronide in the colored foods of the present invention may be 12 ppm or less, preferably from 0 ppm to 5 ppm, and more preferably from 1 ppm to 5 ppm. The content of luteolin-3'-glucuronide is associated with the characteristic smell of rosemary; however, since this substance also has an anti-fading effect, the inherent flavors of the foods can be kept at satisfactory levels while enhancing the anti-fading effect of rosmarinic acid by ensuring that luteolin-3'-glucuronide is contained in the above-cited amounts. The content of carnosic acid and/or carnosol in the colored foods of the present invention is preferably 0.5 ppm or less, and it is more preferred that they do not contain carnosic acid or carnosol.

The contents of rosmarinic acid, luteolin-3'-glucuronide, carnosic acid and carnosol can respectively be quantified using a common analyzer such as HPLC. While the applicable analytical column also is not particularly limited, a common ODS resin column may be used with advantage. The solvent is not particularly limited, either, and commonly employed solvents such as acetonitrile, methanol, or tetrahydrofuran may be used with advantage. While the detection method also is not particularly limited, a commonly used apparatus such as a UV detector may advantageously be used for detection. Specifically, the methods described in the section of Examples may typically be adopted for quantification.

### (Method for producing colored foods)

The present invention relates to colored foods in which the weight concentration ratio of luteolin-3'-glucuronide to rosmarinic acid is 0.5 or less, and while the method for their production is not particularly limited, they can be produced from foods containing a dye component by a method comprising adjusting the weight concentration ratio of luteolin-3'-glucuronide to rosmarinic acid to be no higher than 0.5.

And the colored foods of the present invention can be produced by a producing method comprising:
adjusting the content of rosmarinic acid to be from 3 ppm to 1000 ppm;
adjusting the content of luteolin-3'-glucuronide to be from 0 ppm to 5 ppm; and
optionally adjusting the content of carnosic acid and carnosol to be 0.5 ppm or less.

And the colored foods of the present invention can also be produced by a producing method comprising incorporating:
a rosemary extract which is obtained by a method comprising immersing a plant body of rosemary in an aqueous solution containing 3 vol% to 60 vol% of ethanol and storing the aqueous solution at ordinary temperature for half a day to 30 days; and removing the plant body of rosemary from the stored aqueous ethanol solution to obtain the supernatant of the aqueous ethanol solution; and
a dye component.

The method for producing the colored foods of the present disclosure may further include the step of incorporating 10 vol% or more of ethanol; the additional step to be included may comprise incorporating 20 vol% or more of ethanol.

On the following pages, the present invention is described by referring to Examples which are by no means intended to limit the scope of the present invention.

### EXAMPLES

### (Example 1) Evaluation (1) for the Flavor of Colored Foods Containing Rosemary Immersed Liquor

### (Production of rosemary immersed liquor)

A hundred grams of rosemary leaves (produce of Spain) were immersed in one liter of an aqueous alcohol solution prepared from a commercial product of spirytus vodka 96° by adjusting its alcohol concentration to 59% and the solution was stored at ordinary temperature for 20 days. Thereafter, the supernatant of the aqueous alcohol solution was transferred to another vessel and passed through a filter paper, yielding a filtrate (rosemary immersed liquor A).

### (Production of a colored food containing the rosemary immersed liquor)

A 1-ml portion of the rosemary immersed liquor A was aliquoted and after adding 20 g of commercial sucrose, 1 g of anhydrous citric acid and 50 mg of trisodium citrate, the mixture was thoroughly stirred. Using a solution of edible Red No. 102 and a solution of edible Yellow No. 4, each prepared by dissolving one of the dyes in 20% alcohol, the stirred mixture was colored to give an edible Red No. 102 content of 0.05 mg and an edible Yellow No. 4 content of 0.02 mg, respectively; subsequently, iron(II) chloride was added to give a concentration of 1000 ppb and the mixture was diluted to a volume of 100 ml to give an alcohol concentration of 20%, whereupon a colored alcoholic beverage (trial sample No. 1) was obtained. As a control, vodka which was adjusted to an alcohol concentration of 59% with no rosemary immersed in it was treated in the same way to prepare another colored alcoholic beverage (trial sample No. 2).

Trial sample Nos. 1 and 2 were analyzed for components as follows.

A 10-µl portion of each of trial sample Nos. 1 and 2 was subjected to HPLC and analyzed for components by measuring the absorbance at 280 nm. Measurements were done using high-speed liquid chromatography and a TSKgel ODS-80Ts QAC30 column in the presence of a water-acetonitrile solvent system. The conditions for analysis were as follows: liquid A was 0.05% TFA (trifluoroacetic acid) in water; liquid B was 0.05% TFA in a 90% acetonitrile aqueous solution; and flow rate was 1 ml/min at a 30-min linear gradient from 0% to 100% liquid B. For identification of the respective compounds, comparison was made with commercial products of the corresponding standard substances in terms of UV absorption curve, retention time, etc. The compounds were quantified (in ppm) by calculation from the UV absorption intensities of the respective standard substances and the results were cited in such a way that fractions of 5 and over in the first decimal place and on were counted in as a unit while the rest was disregarded.

The results of analysis are shown in Table 1.

**[Table 1]**

| | Trial sample No. 1 | Trial sample No. 2 |
|---|---|---|
| Rosmarinic acid | 12 | 0 |
| Luteolin-3'-glucuronide | 4 | 0 |
| Carnosic acid | 0 | 0 |
| Carnosol | 0 | 0 |

From trial sample No. 1containing rosemary immersed liquor A, rosmarinic acid and luteolin-3'-glucuronide were detected in respective amounts of 12 ppm and 4 ppm but the contents of carnosic acid and carnosol were each 0.4 ppm and below.

### (Evaluation for the Flavor of Colored Foods Containing Rosemary Immersed Liquor)

Trial sample Nos. 1 and 2 were subjected to sensory evaluation and a fading test (percent residual dye measurement) by the following methods. For percent residual dye measurement, a portion of each colored alcoholic beverage was first taken and subjected to sensory evaluation and, thereafter, absorbance was measured at 510 nm and 430 nm. In a separate step, another portion of the colored alcoholic beverage was placed in a thermostatic bath at 50°C and irradiated with a 20000-lux fluorescent lamp for 24 hours before absorbance was measured at 510 nm and 430 nm. The respective absorbances after irradiation were divided by the corresponding pre-irradiation values, multiplied by 100, and fractions of 5 and over in the first decimal place and on were counted in as a unit while the rest was disregarded, yielding percent residual dyes as an index for the fading of the colored alcoholic beverages. Also cited were the results obtained by visually evaluating the colors of the colored alcoholic beverages after irradiation.

The sensory evaluation was conducted by five trained panelists and rated on the following four-point scale.

### Smell:

- 4: No characteristic smell was perceived.
- 3: Characteristic smell was not strongly perceived.
- 2: A characteristic smell was perceived.
- 1: A characteristic smell was perceived very strongly.

### Aftertaste:

- 4: No bad aftertaste was perceived.
- 3: Bad aftertaste was not strongly perceived.
- 2: A bad aftertaste was perceived.
- 1: A bad aftertaste was perceived very strongly.

The results of evaluation by the five panelists were collected and the final evaluation was made on the basis of the following three-grade rating system: X (the average point was one or more but less than two); Δ (the average was two or more but less than three); ○ (the average was three or more but four or less).

The results are shown in Table 2.

**[Table 2]**

| | | Example | Comparative Example |
|---|---|---|---|
| | | Trial sample No. 1 | Trial sample No. 2 |
| Sensory evaluation | Smell | ○ | ○ |
| | Aftertaste | ○ | ○ |
| Absorbance | 510 nm | 85 | 5 |
| | 430 nm | 94 | 11 |
| Fading suppression (in visual inspection) | | ○ | × |

In the Example where rosemary immersed liquor A was used, an adequate anti-fading effect was demonstrated and, at the same time, the inherent flavor of the beverage was retained satisfactorily.

### (Comparative Example 1) Evaluation (2) for the Flavor of Colored Food Containing Rosemary Immersed Liquor

A hundred grams of rosemary leaves (produce of Spain) were immersed in one liter of a commercial product of spirytus vodka 96° and the solution was stored at ordinary temperature for 20 days. Thereafter, the supernatant of the aqueous alcohol solution was transferred to another vessel and passed through a filter paper, yielding a filtrate (rosemary immersed liquor B). Using this rosemary immersed liquor B, a colored alcoholic beverage (trial sample No. 3) was prepared in accordance with the method described in Example 1. Trial sample No. 3 was subjected to analysis for components in accordance with the method described in Example 1 and the results are shown in Table 3.

**[Table 3]**

| | Trial sample No. 3 |
|---|---|
| Rosmarinic acid | 1 |
| Luteolin-3'-glucuronide | 3 |
| Carnosic acid | 4 |
| Carnosol | 11 |

As it turned out, trial sample No. 3 contained not only rosmarinic acid but also other components of rosemary such as carnosic acid and carnosol.

Trial sample No. 3 was subjected to sensory evaluation and a fading test (percent residual dye measurement) as in Example 1. The results are shown in Table 4.

**[Table 4]**

| | | Trial sample No. 3 |
|---|---|---|
| Sensory evaluation | Smell | × |
| | Aftertaste | × |
| Absorbance | 510 nm | 91 |
| | 430 nm | 96 |
| Fading suppression (in visual inspection) | | ○ |

Indeed, trial sample No. 3 experienced no drop in absorbance, indicating that the fading of dyes was suppressed (dye fading could be prevented). On the other hand, trial sample No. 3 rated low in both smell and aftertaste, presenting a rather heavy overall flavor due to the perceived characteristic flavor of rosemary. It was thus demonstrated that no good flavor was retained in trial sample No. 3 which used rosemary immersed liquor B.

### (Comparative Example 2) Evaluation for the Flavor of Colored Food Containing Commercial Rosemary Extract

To trial sample No. 2 prepared in Example 1, commercial rosemary extract WSR4-BA694043 (product of Naturex) was added at a concentration of 0.025% to make a colored alcoholic beverage (trial sample No. 4).

Trial sample No. 4 was subjected to component analysis by the method described in Example 1 and the results are shown in Table 5.

**[Table 5]**

| | Trial sample No. 4 |
|---|---|
| Rosmarinic acid | 12 |
| Luteolin-3'-plucuronide | 7 |
| Carnosic acid | 0 |
| Carnosol | 0 |

Trial sample No. 4 was shown to contain not only 12 ppm of rosmarinic acid but also 7 ppm of luteolin-3'-glucuronide. The weight concentration ratio of luteolin-3'-glucuronide to rosmarinic acid was about 0.58.

Trial sample No. 4 was subjected to sensory evaluation and absorbance measurement by the methods described in Example 1 and the results are shown in Table 6.

**[Table 6]**

| | | Trial sample No. 4 |
|---|---|---|
| Sensory evaluation | Smell | × |
| | Aftertaste | × |
| Absorbance | 510 nm | 92 |
| | 430 nm | 96 |
| Fading suppression (in visual inspection) | | ○ |

Indeed, trial sample No. 4 experienced no drop in absorbance, indicating that the fading of dyes was suppressed; the already-known effect of the conventional rosemary extract for preventing the fading of dyes was thus confirmed. On the other hand, trial sample No. 4 rated low in both smell and aftertaste, presenting a rather heavy overall flavor due to the perceived characteristic flavor of rosemary. It was thus demonstrated that a colored food to which the conventional rosemary extract was added was unable to retain a good flavor when the concentration of the rosemary extract was high enough to suppress the fading of dyes.

### (Example 2) Studying the Anti-fading Effect of Rosmarinic Acid Containing Colored Foods

To 30 ml of an aqueous alcohol solution prepared from a commercial product of spirytus vodka 96° by adjusting its alcohol concentration to 59%, 20 g of commercial sucrose, 1 g of anhydrous citric acid and 50 mg of trisodium citrate were added and the mixture was thoroughly stirred. Further, using a solution of edible Red No. 102 and a solution of edible Yellow No. 4, each prepared by dissolving one of the dyes in 20% alcohol, the stirred mixture was colored to give an edible Red No. 102 content of 0.05 mg and an edible Yellow No. 4 content of 0.02 mg, respectively; after adding iron(II) chloride to give a concentration of 1000 ppb, rosemary immersed liquor A prepared in Example 1 (which was found to have a rosmarinic acid concentration of 1347 ppm when analyzed by the method described in Example 1) was added to give the rosmarinic acid concentrations cited in the following Table 7; the respective mixtures were diluted with sterilized water to a volume of 100 ml to prepare colored alcoholic beverages (trial sample Nos. 5 to 9) having alcohol concentrations of about 20%. As a control, a colored alcoholic beverage (trial sample No. 10) was prepared and it had the same composition as trial sample Nos. 5-9 except for the use of vodka containing no rosmarinic acid.

Those colored alcoholic beverages were subjected to sensory evaluation and measurement of percent residual dyes by the methods described in Example 1.

**[Table 7]**

| | | Example | | | | | Comparative Example |
|---|---|---|---|---|---|---|---|
| | | Trial sample No. 5 | Trial sample No. 6 | Trial sample No. 7 | Trial sample No. 8 | Trial sample No. 9 | Trial sample No. 10 |
| Concentration of rosmarinic acid (ppm) | | 3 | 5 | 10 | 40 | 100 | 0 |
| Sensory evaluation | Smell | ○ | ○ | ○ | ○ | Δ | ○ |
| | Aftertaste | ○ | ○ | ○ | Δ | Δ | ○ |
| Absorbance | 510 nm | 35 | 75 | 85 | 97 | 97 | 5 |
| | 430 nm | 46 | 85 | 96 | 99 | 99 | 11 |
| Fading suppression (in visual inspection) | | Δ | ○ | ○ | ○ | ○ | × |

When the concentration of rosmarinic acid was 3 ppm, the amount of residual dyes was somewhat inadequate but a certain degree of anti-fading effect was observed. An adequate anti-fading effect was observed when rosmarinic acid was contained in amounts of 5 ppm and more. Even when rosemary immersed liquor A was added to give a rosmarinic acid concentration of 100 ppm, no serious problem occurred except for slightly lowered rating in the evaluation of aftertaste. Even from the viewpoint of cost, addition of such amounts as to give rosmarinic acid concentrations of 40 ppm and below was thought to be sufficient for providing adequate effects.

### (Example 3) Impacts of Alcohol on the Effect of Rosmarinic Acid for Preventing the Fading of Dyes

The anti-fading effect of rosmarinic acid is known to derive from its activity for preventing oxidation. The oxidation preventing activity of rosmarinic acid was measured by the test for assaying the DPPH radical scavenging activity, which is a common method for measuring the oxidation preventing activity.

Specifically, a solution having 16 mg of a commercial DPPH reagent dissolved in 100 ml of ethanol, a 0.2 mM MES buffer (pH 6.0) and an aqueous solution of 60% ethanol were mixed in equal volumes and to a 3-ml portion of the resulting solution, 2 ml of a sample of rosmarinic acid in water was added and the mixture was allowed to stand at 25°C for 30 minutes before absorbance was measured at 520 nm. For comparison, absorbance was measured by replacing the aqueous solution of rosmarinic acid with pure water containing no rosmarinic acid. The concentration of rosmarinic acid at which the absorbance ratio with respect to a control sample was 50% was used as a 50% scavenging concentration for calculating the oxidation preventing activity. The obtained values are for aqueous solutions of 20% ethanol, since the alcohol concentration in the final reaction mixture in liquid form was 20%. Measurement was also conducted for a solution of DPPH sample that was prepared using pure water in place of the aqueous solution of 60% ethanol and the result was cited as the oxidation preventing activity in water. The overall results are shown in Table 8.

**[Table 8]**

| | Concentration of rosmarinic acid necessary for decreasing radicals by half (ppm) |
|---|---|
| Water | 27.9 |
| 20% ethanol | 19.4 |

As it turned out, the concentration of rosmarinic acid that was required to decrease radicals by half was low in the 20% ethanol environment. It was therefore found that the DPPH radical scavenging activity of rosmarinic acid was greater in the aqueous solution of 20% ethanol than in water

In the alcohol containing colored food, the oxidation preventing activity of rosmarinic acid increased and, consequently, the anti-fading effect increased, whereupon an anti-fading effect developed even when the presence of rosmarinic acid was small; this suggested the possibility of reducing the impact that might be exerted on the inherent flavor of the food through addition of rosmarinic acid or a rosemary extract containing rosmarinic acid.

### (Example 4) Evaluation for the Flavor of Colored Foods Containing Rosemary Extract

To a 0.5 ml portion of the rosemary immersed liquor A prepared in Example 1, 0.1 g of *kyoho* straight juice (produce of Yamanashi Prefecture) was added and the mixture was thoroughly stirred. Further, using a solution of edible Red No. 102 prepared by dissolving the dye in 20% alcohol, the stirred mixture was colored to give an edible Red No. 102 content of 0.08 mg; after adding iron(II) chloride to give a concentration of 1000 ppb, the mixture was diluted to a volume of 100 ml to give an alcohol concentration of 10%, whereupon a colored alcoholic beverage (trial sample No. 11) was prepared. In a separate step, vodka which was adjusted to an alcohol concentration of 59% with no rosmarinic acid immersed in it was treated in the same way to prepare another colored alcoholic beverage (trial sample No. 12).

Trial sample No. 11 was subjected to component analysis by the method described in Example 1 and the results are shown in Table 9.

**[Table 9]**

| | Trial sample No. 11 |
|---|---|
| Rosmarinic acid | 5 |
| Luteolin-3'-glucuronide | 2 |
| Carnosic acid | 0 |
| Carnosol | 0 |

Trial sample Nos. 11 and 12 were subjected to sensory evaluation and a fading test (percent residual dye measurement) in accordance with the methods described in Example 1. The results are shown in Table 10.

**[Table 10]**

| | | Trial sample No. 11 | Trial sample No. 12 |
|---|---|---|---|
| Sensory evaluation | Smell | ○ | ○ |
| | Aftertaste | ○ | ○ |
| Absorbance | 510 nm | 53 | 31 |
| Fading suppression (in visual inspection) | | ○ | × |

In trial sample No. 11 using rosemary immersed liquor A, sufficient anti-fading effect was exhibited and the inherent flavor of the food was also retained satisfactorily.

## Claims

1. A colored food that contains rosmarinic acid and a dye component and in which the ratio in weight concentration of luteolin-3'-glucuronide to rosmarinic acid is 0.5 or less and which further contains 20 vol% or more of ethanol.

2. The colored food according to claim 1, wherein the ratio in weight concentration of luteolin-3'-glucuronide to rosmarinic acid is from 0 to 0.45.

3. The colored food according to claim 1 or 2, wherein
(i) the content of rosmarinic acid is from 3 ppm to 1000 ppm,
(ii) the content of luteolin-3'-glucuronide is 12 ppm or less, and/or
(iii) the content of carnosic acid and/or carnosol is 0.5 ppm or less.

4. The colored food according to claim 3, wherein the content of luteolin-3'-glucuronide is from 0 ppm to 5 ppm.

5. A colored food that contains rosmarinic acid and a dye component and in which the content of rosmarinic acid is from 3 ppm to 1000 ppm, the content of luteolin-3'-glucuronide is 12 ppm or less and which further contains 20 vol% or more of ethanol.

6. The colored food according to claim 5, wherein the content of luteolin-3'-glucuronide is from 0 ppm to 5 ppm, and/or wherein the content of carnosic acid and/or carnosol is 0.5 ppm or less.

7. The colored food according to any of claims 1 to 6 which does not contain carnosic acid or carnosol.

8. The colored food according to any of claims 1 to 7 which is a beverage, and preferably wherein the beverage is filled in a container.

9. The colored food according to any of claims 1 to 8, wherein the dye component is a dye having the anthocyanin skeleton, or wherein the dye component is a tar dye.

## Patentansprüche

1. Gefärbtes Lebensmittel, das Rosmarinsäure und eine Farbstoffkomponente enthält und in dem das Verhältnis der Gewichtskonzentration von Luteolin-3'-Glucuronid zu Rosmarinsäure 0,5 oder weniger ist und das des Weiteren 20 Vol% oder mehr Ethanol enthält.

2. Gefärbtes Lebensmittel nach Anspruch 1, wobei das Verhältnis der Gewichtskonzentration von Luteolin-3'-Glucuronid zu Rosmarinsäure von 0 bis 0,45 ist.

3. Gefärbtes Lebensmittel nach Anspruch 1 oder 2, wobei
(i) der Gehalt an Rosmarinsäure von 3 ppm bis 1000 ppm ist,
(ii) der Gehalt an Luteolin-3'-Glucuronid 12 ppm oder weniger ist, und/oder
(iii) der Gehalt an Carnosolsäure und/oder Carnosol 0,5 ppm oder weniger ist.

4. Gefärbtes Lebensmittel nach Anspruch 3, wobei der Gehalt an Luteolin-3'-Glucuronid von 0 ppm bis 5 ppm ist.

5. Gefärbtes Lebensmittel, das Rosmarinsäure und eine Farbkomponente enthält und in dem der Gehalt an Rosmarinsäure von 3 ppm bis 1000 ppm ist, der Gehalt an Luteolin-3'-Glucuronid 12 ppm oder weniger ist und das des Weiteren 20 Vol% oder mehr Ethanol enthält.

6. Gefärbtes Lebensmittel nach Anspruch 5, wobei der Gehalt an Luteolin-3'-Glucuronid von 0 ppm bis 5 ppm ist, und/oder wobei der Gehalt an Carnosolsäure und/oder Carnosol 0,5 ppm oder weniger ist.

7. Gefärbtes Lebensmittel nach einem der Ansprüche 1 bis 6, das keine Carnosolsäure oder Carnosol enthält.

8. Gefärbtes Lebensmittel nach einem der Ansprüche 1 bis 7, das ein Getränk ist und bevorzugt wobei das Getränk in einen Behälter gefüllt ist.

9. Gefärbtes Lebensmittel nach einem der Ansprüche 1 bis 8, wobei die Farbstoffkomponente ein Farbstoff ist, der das Anthocyan-Skelett aufweist oder wobei die Farbstoffkomponente ein Teerfarbstoff ist.

## Revendications

1. Aliment coloré qui contient de l'acide rosmarinique et un composant colorant et dans lequel le rapport en concentration pondérale du lutéoline-3'-glucuronide à l'acide rosmarinique est de 0,5 ou moins et qui contient en outre 20 % en vol ou plus d'éthanol.

2. Aliment coloré selon la revendication 1, dans lequel le rapport en concentration pondérale du lutéoline-3'-glucuronide à l'acide rosmarinique est de 0 à 0,45.

3. Aliment coloré selon la revendication 1 ou 2, dans lequel
(i) la teneur en acide rosmarinique est de 3 ppm à 1000 ppm,
(ii) la teneur en lutéoline-3'-glucuronide est de 12 ppm ou moins, et/ou
(iii) la teneur en acide carnosique et/ou en carnosol est de 0,5 ppm ou moins.

4. Aliment coloré selon la revendication 3, dans lequel la teneur en lutéoline-3'-glucuronide est de 0 ppm à 5 ppm.

5. Aliment coloré qui contient de l'acide rosmarinique et un composant colorant et dans lequel la teneur en acide rosmarinique est de 3 ppm à 1000 ppm, la teneur en lutéoline-3'-glucuronide est de 12 ppm ou moins et qui contient en outre 20 % en vol ou plus d'éthanol.

6. Aliment coloré selon la revendication 5, dans lequel la teneur en lutéoline-3'-glucuronide est de 0 ppm à 5 ppm, et/ou dans lequel la teneur en acide carnosique et/ou en carnosol est de 0,5 ppm ou moins.

7. Aliment coloré selon l'une quelconque des revendications 1 à 6 qui ne contient pas d'acide carnosique ou de carnosol.

8. Aliment coloré selon l'une quelconque des revendications 1 à 7 qui est une boisson, et de préférence dans lequel la boisson est chargée dans un récipient.

9. Aliment coloré selon l'une quelconque des revendications 1 à 8, dans lequel le composant colorant est un colorant ayant le squelette anthocyanine, ou dans lequel le composant colorant est un colorant goudron.
